# EUROPEAN PATENT APPLICATION

(11) **EP 4 016 680 A1**
(43) Date of publication of application: **22.06.2022**
(21) Application number: 20215599.0
(22) Date of filing: 18.12.2020
(51) Int. Cl.: H01M 8/1058, H01M 50/403, H01M 8/1069, H01M 8/18

(54) **METHOD FOR LAMINATING A POLYMER ELECTROLYTE FILM ONTO A POROUS SUPPORT LAYER FOR ENERGY STORAGE DEVICES**

(71) Applicant: PAUL SCHERRER INSTITUT, 5232 Villigen PSI (CH)
(72) Inventor: GUBLER, Lorenz, 5417 Untersiggenthal (CH); SCHNEIDER, Aaron, 5430 Wettingen (CH); DUBURG, Jamie, 5200 Brugg (CH); ZANZOLA, Elena, 3007 Bern (CH)
(74) Representative: Fischer, Michael

(57) **Abstract**

The present invention discloses a composite electrolyte membrane and a method to fabricate it. The composite electrolyte membrane is meant to be used in an electrochemical energy storage or conversion device, including but not limiting to redox flow batteries, fuel cells and electrolyzers.

The composite electrolyte membrane is produced according to a method for laminating a polymer electrolyte film onto a porous support layer for generating a composite membrane for energy storage devices; comprising the following steps:
a) placing the polymer electrolyte film on a first flat support plate;
b) placing the porous support layer on the polymer electrolyte film;
c) wetting the porous support layer with a first solution comprising a first solvent, which is a high boiling point solvent, used to partially solubilize the polymer electrolyte film allowing its solubilized fraction to flow into the pores of the porous support and a second solvent, which is a low boiling point solvent, to prevent excessive solubilization of the polymer electrolyte film, wherein the solubilized fraction of the polymer electrolyte film forms
an interlocking interface with a superficial part of the porous support layer;
d) placing a second flat support plate, preferably with two tissues to absorb solvent excess, on the wetted porous support layer to form a stack having sandwiched the polymer electrolyte film, the interlocking interface and the porous support layer between the first and the second flat support plates;
e) hot-pressing the stack at an elevated temperature and an elevated pressure for a pre-defined amount of time; and
f) cooling down the hot-pressed stack and removing the first and the second flat support plate to isolate the composite membrane comprising *i)* the polymer electrolyte film, *ii)* the now solidified and formerly solubilized fraction of the polymer electrolyte film penetrated into the pores of the porous support layer forming a solidified interlocking interface and *iii)* the porous support layer.

## Description

The present invention relates to a method for laminating a polymer electrolyte film onto a porous support layer, in particular for energy storage devices.

Nowadays, energy storage technologies are becoming essential in the transition of replacing fossil fuels with more renewable electricity production means. The integration of storage technologies would allow a better management of the energy peaks congestion since the surplus of produced electricity will be stored and released on demand.

Among energy storage technologies, electrochemical storage means are particularly flexible. They mainly consist of secondary batteries, such as lithium-ion and redox flow batteries. In redox flow batteries, liquid electrolytes undergo redox reactions on the surface of carbon-based porous electrodes physically separated by a membrane. Membranes and electrodes are located in a unit electrochemical cell, comprising also two current collectors.

Membranes for electrochemical energy storage devices are designed for a low resistance transport pathway of specific ions and to block the passage of undesired ionic and neutral compounds, thus acting as a component for selective transport of species. More specifically, the primary role of a membrane in a unit electrochemical cell is to mediate the transport of ionic charges between the two compartments (anode and cathode), to allow each half-cell redox reaction to proceed in continuous manner while electrons are exchanged via an external circuit. At the same time, it is not desirable for certain compounds, *e.g*. reactants or products, to transfer across the membrane, as this may impair the faradic efficiency, depolarize an electrode, pollute the product, trigger degradation reactions, reduce capacity retention, or cause other unwanted effects.

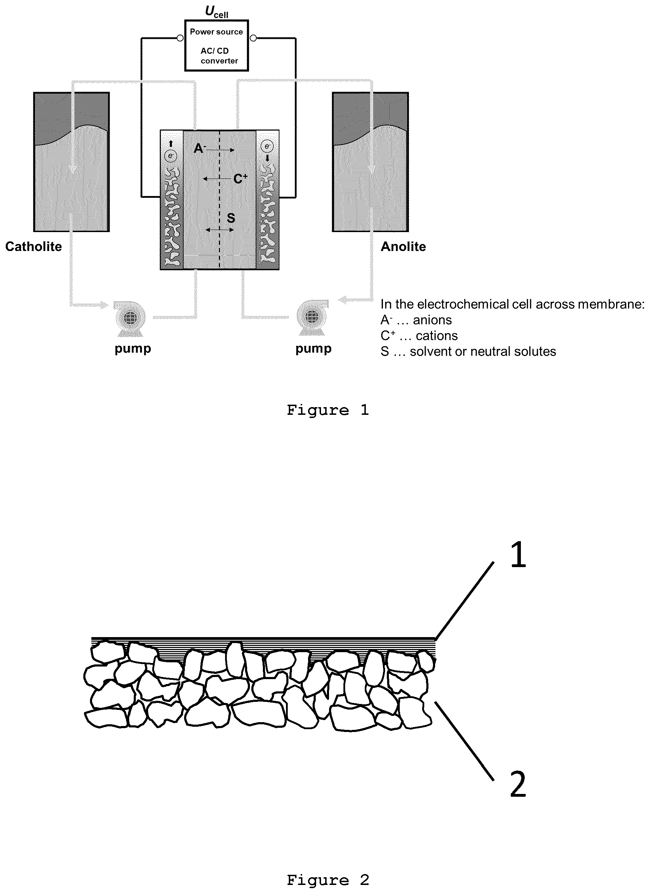

Figure 1 schematically shows an energy storage device, such as a redox flow battery, comprising a unit electrochemical cell with a polymer electrolyte membrane placed between two electrodes, where the anodic and cathodic reactions take place. The ions exchanged across the membrane, depending on the composition and architecture of the material may be anions, cations, or both. In addition, the polymer typically takes up solvent molecules, if present, and other dissolvable species.

Compared to the use of a liquid electrolyte, an electrochemical cell comprising a polymer electrolyte can be made very thin. The resistive path for charge flow across the electrolyte is therefore short and the cell or stack of cells can be realized in a compact design.

In many cases, the ohmic resistance of the membrane represents an essential contribution to conversion efficiency losses. More specifically, the ohmic resistance can have a significant impact on the voltaic efficiency of the electrochemical cell. Therefore, it is of interest to minimize the thickness of the membrane. Membranes with thicknesses down to 10 to 20 microns can be handled as free-standing films and assembled into an electrochemical cell. On the other hand, membranes with thickness in the range of microns, say, below 10 microns, are prone to rupture and/or pinholing during handling, assembly into the cell or during cell operation.

An approach, which is reported in the open and patent literature, is to assemble a unit electrochemical cell with a composite membrane, comprising a polymer "skin layer", such as polybenzimidazole or PBI-type and a supporting polymeric "porous layer", such as polypropylene or PP.

In these approaches, the "skin layer" is combined with the "porous layer" using different techniques, such as casting to prepare the "skin layer" and lamination by hot-pressing to "glue" them together.

Using casting, the "skin layer" is coated from a solution of said polymer onto the porous layer (solution casting). Here, care needs to be exercised to prevent the seeping of the solubilised polymer through the porosity of the "support layer", thereby blocking the pores.

Another approach involves the lamination of the polymer "skin layer" with a porous "support layer" by hot-pressing. The elevated temperature during the hot-pressing leads to softening of the "skin layer" and the formation of a conformal interface between the substrate and the film.

To prevent delamination of the composite membrane, the adhesion of the two layers ("skin layer" and "support layer", respectively) needs to be maintained during handling, assembling and operation of the components in the actual unit electrochemical cell. Methods to improve adhesion have been reported in the literature, such as plasma or corona treatment of the porous substrate.

It is therefore the objective of the present invention to provide a method for laminating a polymer electrolyte film onto a porous support layer for energy storage devices.

This objective is achieved according to the present invention by a method for laminating a polymer electrolyte film onto a porous support layer for generating a composite membrane, preferably for energy storage devices; comprising the following steps:
a) placing the polymer electrolyte film on a first flat support plate;
b) placing the porous support layer on the polymer electrolyte film;
c) wetting the porous support layer with a first solution comprising a first solvent, which is a high boiling point solvent, to partially solubilize the polymer electrolyte film allowing its solubilized fraction to flow into the pores of the porous support and a second solvent, which is a low boiling point solvent, to prevent excessive solubilization of the polymer electrolyte film, wherein the solubilized fraction of the polymer electrolyte film forms an interlocking interface with a superficial part of the porous support layer;
d) placing a second flat support plate, preferably with two tissues to absorb solvent excess, on the wetted porous support layer to form a stack having sandwiched the polymer electrolyte film, the interlocking interface and the porous support layer between the first and the second flat support plates;
e) hot-pressing the stack at an elevated temperature and an elevated pressure for a pre-defined amount of time;
f) cooling down the hot-pressed stack and removing the first and the second flat support plate to isolate the composite membrane comprising:
   *i)* the polymer electrolyte film,
   *ii)* the now solidified and formerly solubilized fraction of the polymer electrolyte film penetrated into the pores of the porous support layer forming a solidified interlocking interface, and
   *iii)* the porous support layer.

Thus, in the resulting composite membrane, the polymer electrolyte film ("skin layer") and the porous support layer ("support layer") are mechanically bonded to form an interlocked interface. The adhesion of these two layers prevents the composite membrane from getting damaged, while having minimal impact on the resistance by allowing the access of a liquid electrolyte through its porous structure.

In order to improve the adhesion of the two layers, the cooled down composite membrane can be submerged in a second solution comprising the second solvent only for a pre-defined amount of time. This step supports the solidification of the solidified interlocking interface and therefore the adhesion of the two layers.

Advantageously, in the first solution the volumetric ratio of the first solvent/the second solvent can be in the range of 3:1 to 1:5, preferably within 2:1 and 1:3, more preferably 1:2.

In a further preferred embodiment of the present invention, the polymer electrolyte film has a thickness in the range of 0.5 to 20 microns, preferably 1 to 10 microns, and the porous support layer has a thickness in the range of 20 to 100 microns, preferably in the range of 20 to 40 microns.

Suitable materials for the polymer electrolyte film and the porous support layer can be selected from a group consisting of: polybenzimidazole (PBI), polyphenylsulfone (PPSU), polysulfone (PSF), polyethersulfone (PES), sulfonated polyether ether ketone (SPEEK), sulfonated polyimide (SPI), polyfluoroether (PFE), polyfluoroether ketone sulfone (PAEK), polyphthalazone ether ketone (PEK), polyacrylonitrile (PAN), polyvinylidene fluoride (PVDF), polyimide (PI), polyurethane (PU), polyvinyl chloride (PVC), polyvinyl alcohol (PVA), polytetrafluoroethylene (PTFE), polyethylene (PE), polyethylene terephthalate (PET), polyetherimide (PEI), ethylene-tetrafluoroethylene copolymer (ETFE), polyphthalamide (PPA), polyvinylpolypyrrolidone (PVP) and polypropylene (PP).

Suitably, the first solvent can be selected from a group of high-boiling point polar aprotic solvents consisting of: N-methylpyrrolidone, N,N-dimethylacetamide, N,N-dimethylformamide, and dimethylsulfoxide, and the second solvent can be selected from a group consisting of: isopropanol, n-propanol, methanol, ethanol, generally n-alkanoles and iso-alkanoles up to C8, tetrahydrofuran, dioxanes, cyclohexane, petroleum ether, acetonitrile, ethyl acetate, acetone, dimethyl ether, methyl ethyl ether, methyl tert-butyl ether, C₁-C₈ n-alkanoles, iso-alkanoles and ethers.

A pair of polymer layers having high adhesion and advantageous electrical properties can be achieved, when the polymer electrolyte film is a PBI-type polymer and the porous support layer is a porous olefin-type polymer. Well suited for this pair of polymer layers can be the first solution when comprising DMAc as first solvent and isopropanol as second solvent.

Further, the above-mentioned objective is achieved according to the present invention by a composite polymer membrane being produced by a method according to any of the claims 1 to 8 and a unit electrochemical cell comprising a composite polymer membrane being produced by a method according to any of the claims 1 to 8.

Preferred embodiments of the present invention are described hereinafter with reference to the attached drawings which depict in:
- Fig. 1: schematically an energy storage device, such as a redox flow battery, comprising a unit electrochemical cell with a polymer electrolyte membrane placed between two electrodes according to the prior art;
- Fig. 2: schematically a composite membrane configuration comprising a thin (<20 microns) polymer film, hereinafter also called "skin layer", and a porous polymer support, hereinafter also called "support layer";
- Fig. 3: scanning electron microscopy (SEM) imaging and elemental mapping using energy dispersive X-ray spectroscopy (EDX) of the composite membrane according to Figure 2; each single layer is labeled accordingly;
- Fig. 4: galvanostatic cycling in an all-vanadium redox flow cell at 120 mA/cm² and a flow rate of 60 mL/min; the electrochemical cell with an active area of 5x5 cm is assembled each time with a different membrane:
i) composite membrane according to the present invention 6×6 cm (PP-PBI, in black-dotted line);
ii) FAP-450 (Fumatech BWT group, Germany) anion exchange membrane 6x6 cm (FAP-450, in blue-dotted line);
iii) Nafion (NR212, Ion Power USA) cation exchange membrane 6x6 cm (NR212, in red-dotted line).

The present invention relates to a porous separator, an experimental method of fabricating the same, and an energy storage device including the same. More specifically, the present invention describes a fabrication method for improving the mechanical adhesion of the "skin layer" with the "support layer", both initially in the form of solid polymers, by forming an interlocking interface by partially dissolving the "skin layer" during a lamination procedure to the "support layer". The present invention allows for obtaining a composite polymer comprising the supported polymeric "skin layer" characterized by an interlocking interface. This composite polymer is used as membrane electrolyte in a rechargeable energy storage device.

In the description, the following terminology will be used:
a. Polymers:
   1. a polymer film with a thickness in the range of 0.5 to 20 microns, more preferably, 1 to 10 microns defined in the present invention as "skin layer", for example polybenzimidazole (PBI),
   2. a porous polymer film with a thickness of 20 to 100 microns, more preferably, 20-40 microns defined in the present invention as "support layer" or porous polymer support, for example polypropylene (PP).
b. Polymer electrolyte:
   It refers to the PBI layer or "skin layer" when immersed in the electrolyte (acid or alkaline).
c. Organic solvents:
   1. defined in the present invention as "working solvents", such as dimethylacetamide (DMAc); additionally, (N-methyl-2-pyrrolidine, NMP), dimethyl formamide (dimethylformamide, DMF), dimethylsulfoxide (dimethylsulfoxide, DMSO) can be defined in the same manner for the present invention.
   2. defined in the present invention as "supporting solvents", such as isopropyl alcohol (IPA),n-propanol, methanol, ethanol, (generally: n-alkanoles and iso-alkanoles up to C8), tetrahydrofuran, dioxanes, cyclohexane, petroleum ether, acetonitrile, ethyl acetate, acetone.
d. Composite membrane:
   It refers to the final material comprising the "skin layer" and the "support layer" with an interlocked interfacial structure.
e. Composite polymer electrolyte:
   It refers to the composite membrane when immersed in the electrolyte (acid or alkaline).

In detail, the present method discloses the lamination of a polymer film with high melting point or no melting point but decomposition temperature to a porous polymer support with limited temperature stability.

The porous polymer support is a polymer with open porosity (in a thickness range of 20-100 microns, more preferably 20-40 microns), such as polyolefins. This type of material is commonly used as battery separator in rechargeable batteries, *e.g.* lithium-ion batteries.

The support layer does not have any ion conducting properties by itself, but it can absorb a liquid electrolyte into its porosity to provide ionic conduction pathways from one side to the other. Furthermore, it does typically not swell in said liquid electrolyte.

One example for the polymer ("skin layer") to be laminated is of the class of polybenzimidazole (PBI) polymers. By itself, PBI generally does not possess notable ionic conductivity. Upon imbibition of electrolyte, typically a mineral acid or an aqueous solution of a mineral acid, such as sulfuric acid, the material becomes ionically conducting due to the protonation of the imidazole groups inside the PBI polymer and uptake of liquid electrolyte. Acid doped PBI membranes can be used as polymer electrolytes in a number of electrochemical cells, such as polymer electrolyte fuel cells and redox flow batteries.

For the use of such an electrolyte membrane in a unit electrochemical cell, it may be of interest to use a film thickness of 20 microns down to 1 micron or below to minimize ohmic resistance. Furthermore, to provide mechanical robustness and prevent delamination, the PBI-type polymer film is mechanically bonded to a "support layer" (20-100 microns), which is a porous polymer film, through partially dissolving and bonding it to the "support layer" by hot-pressing.

The present invention provides a composite electrolyte membrane and a method for preparing such, wherein the composite polymer membrane consists of the support layer laminated to the skin layer, here for example a PBI-type layer.

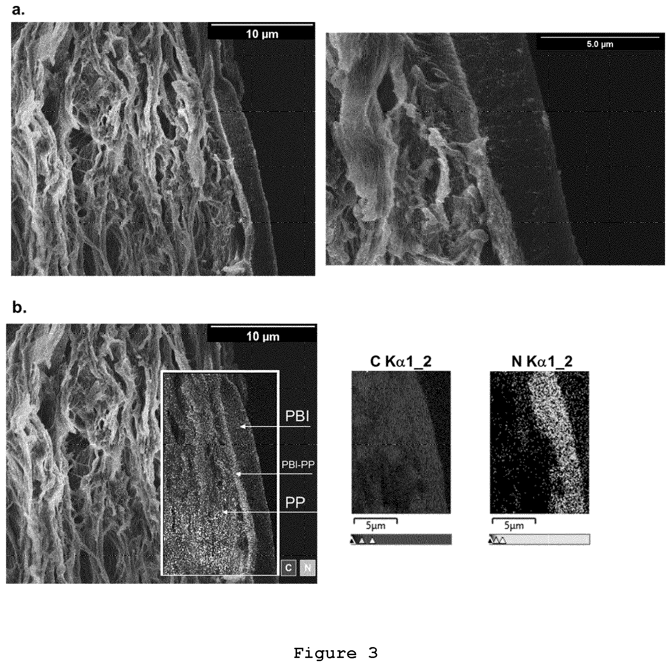

The lamination procedure of the present invention involves a partial solubilization of the PBI-type polymer film with a suitable solvent mixture, which allows it to flow into the porosity of the support layer (also initially a solid polymer) creating an interlocking interface. This interface significantly reduces the probability of delamination of the PBI-type layer from the support layer as this is shown in Figure 3. Figure 3a) shows SEM images (10 and 5 microns, respectively) of the composite membrane of the present invention, comprising: i) a thin (<20 microns) polymer film (PBI-type), *ii)* a porous polymer support (20-100 microns, PP-type) and *iii)* an interlocked interface of the two layers (PBI-PP). Figure 3b) shows an SEM image and EDX element maps (for nitrogen and carbon C Kα_{1_2} and N Kα_{1_2}, respectively) of the composite membrane of the present invention. All SEM images are acquired with a Hitachi Regulus 8230 high resolution scanning electron microscope using an in-lens detector, 6.0 kV accelerated voltage and 2-3 µA current.

The solvent used to partially solubilize the "skin layer", such as the PBI-type polymer layer, in the process described herein comprises advantageously a mixture of two types of solvents. Type A solvent is defined herein as the "working solvent" able to completely dissolve the "skin layer", here for the PBI-type polymer, respectively dimethylacetamide (DMAc). Type B solvent, named herein "supporting solvent", is a low boiling point solvent, for example isopropyl alcohol (IPA) that prevents excessive solubilization of the "skin layer".

In an example with a PBI-type polymer layer as "skin layer", the procedure of the present invention comprises the following steps: The PBI-type polymer layer ("skin layer") in the form of a solid polymer film is placed on a flat surface, e.g. glass or Teflon, on top of which the "support layer" is placed. The solvent mixture explained above is then applied to the porous polymer layer.

The solvent mixture penetrates through the porosity of the "support layer" to the "skin layer" (here the PBI-type layer) which is partially solubilized in the process.

The assembly, including a tissue to absorb excess amount of solvent and a flat surface on top, is subsequently laminated in a hot-press.

The final composite membrane, consisting of a mechanically bonded PBI-type polymer (or "skin layer") and polyolefin-type polymer (or "support layer"), is achieved after a heat treatment and a solvent exchange with a non-dissolving solvent to form the interlocked polyolefin-PBI interface.

In the present configuration of the composite membrane, the PBI-type layer has a dry film thickness in the range of 0.5-20 microns, while the "support layer" has a thickness in the range of 20-100 microns.

The so-fabricated composite membrane can subsequently be used as a polymer electrolyte membrane in an electrochemical energy storage or conversion device, including, but not limiting to, redox flow batteries, fuel cells and electrolyzers.

In the examples provided herein, the composite membrane is used in a lab-scale all-vanadium redox flow cell. The electrolyte used in this electrochemical system is a solution of vanadium-ions with different oxidation states in aqueous sulfuric acid and phosphoric acid. The negative electrolyte contains V(II) and V(III), the positive electrolyte V(IV) and V(V). The membrane can be assembled into the unit cell with or without prior swelling in the electrolyte. Then, the assembled cell is operated in charge discharge mode using an electrochemical workstation.

Composite membranes of the type described herein are significantly less likely to delaminate compared to composite membranes laminated conventionally, i.e., without the application of the solvent mixture prior to hot-pressing. The improved lamination quality of the composite membranes can be observed after disassembling the membrane from the cell at the end of the charging/ discharging test. Whereas, conventionally laminated bilayer membranes have a high tendency to delaminate, the composite (bilayer) membranes of the present invention remains well-laminated after the test. Polymer electrolytes with a low thickness (<20 µm) are desired for their inherent low ohmic resistance. However, free-standing films in this thickness range are at risk of rupturing or developing pinholes during handling and assembling into the cell or during the cell operation. On the contrary, composite structures consisting of the supported "skin layer", provide the needed mechanical robustness to prevent the "skin layer" from being damaged.

The present invention therefore discloses a new method to "glue" two solid polymer layers together, by forming a mechanically bonded interface between the "skin layer" and the "support layer", minimizing seeping of the solubilized polymer and delamination, while maintaining the ability to precisely tune the thickness of the "skin layer".

The "skin layer" with a desired thickness between 0.5-20 microns and more preferably around 1-10 microns is placed on a clean flat surface (e.g. a glass or Teflon) and is covered by the porous polymer support ("support layer") with an equal or slightly larger size. In this step, any dust or unwanted particles between the two to be glued layers should be removed.

Potential materials to be used as "skin layer" include, but are not limited to, various types of polybenzimidazole (PBI) polymers such as, poly(2,2'-m-30 phenylene-5,5'-bibenzimidazole) (meta-PBI), poly(2,2'-p-phenylene-5,5'-bibenzimidazole) (para-PBI), poly(2,5'-benzimidazole) (AB-PBI), poly(p-phenylene benzobisimidazole) (PBDI), poly-2,2-(X,Y-pyridine)-5,5' -bibenzimidazole (P-PBI) where (X,Y) is (2,5), (3,5), (2,6) 35 or (2,4), and poly-[(1-(4,4' - diphenylether)-5-oxybenzimidazole)-benzimidazole] (PBI-OO), or derivatives of these polymers obtained by chemical modification, for example the attachment of functional groups to the nitrogen of the benzimidazole group or the phenylene ring, as described in the open and patent literature. As an example, the European patent application EP2018/083578 describes N-alkylation of PBI, such as the attachment of the phosphonate ester -CF₂-P(=O)(OEt)₂, which after hydrolysis yields the pendant chain with phosphonic acid group -CF₂-P(=O) (OH)₂.

Other potential materials to be used as "skin layer" include, but are not limited to, polyphenylsulfone (PPSU), polysulfone (PSF), polyethersulfone (PES), sulfonated polyether ether ketone (SPEEK), sulfonated polyimide (SPI), polyfluorether (PFE), polyfluorether ketone sulfone (PAEK), polyphthalazone ether ketone (PEK), polyacrylonitrile (PAN), polyvinylidene fluoride (PVDF), polyimide (PI), polyurethane (PU), polytetrafluoroethylene (PTFE), polyphenylsulfone (PPSU), polyethersulfone (PES), polyethylene (PE), polyethylene terephthalate (PET), polyetherimide (PEI), ethylene-tetrafluoroethylene copolymer (ETFE), polyphthalamide (PPA), polyvinylpolypyrrolidone (PVP) and polypropylene (PP).

Potential "support layer" materials include polyolefines, such as, polypropylene (PP) polyethylene (PE), polyvinylidene fluoride (PVDF) and polytetrafluoroethylene (PTFE), polyvinylchloride (PVC), polyvinyl alcohol (PVA).

Subsequently, a solvent mixture, comprising two types of solvents, respectively A and B, is evenly applied and distributed across the "support layer". Any potential air bubbles between the two layers are removed. Type A, the "working solvent", is a high boiling point solvent used to partially solubilize the "skin layer" allowing it to flow into the pores of the "support layer". Type B, the "supporting solvent", is a low boiling point solvent that prevents excessive solubilization of the "skin layer".

Solvents that can be used as a type A solvents include, but are not limited to, dimethylsulfoxide (DMSO), N,N-dimethylformamide (DMF), N,N dimethylacetamid (DMAc) and N-methylpyrrolidone (NMP).

Type B solvents include, but are not limited to, isopropanol, n-propanol, methanol, ethanol, (generally: n-alkanoles and iso-alkanoles up to C8), tetrahydrofuran, dioxanes, cyclohexane, petroleum ether, acetonitrile, ethyl acetate, acetone, dimethyl ether, methyl ethyl ether, methyl tert-butyl ether.

The volumetric ratio of solvents A / B should be in the range of 3:1 to 1:5, preferably within 2:1 and 1:3, more preferably 1:2. Depending on the desired properties of the composite membrane, the volumetric ratio of solvents can be varied. Increasing the content of the type A solvent increases the solubilizing agent in the mixture, resulting in a larger fraction of the skin layer being dissolved and thus creating a thicker interfacial layer. On the contrary, increasing the content of the type B solvent increases the non-solubilizing agent in the mixture, thus resulting in a thinner interface between the "skin" and the "support layer". An increase in thickness of the interface layer leads to a stronger mechanical bond, but will simultaneously increase the ohmic resistance due to a higher blockage of the pores in the substrate.

The solvent mixture penetrates through the porous structure of the support layer into the "skin layer", which is partially solubilized in the process and, to a low degree, flows into the support structure.

Next, two small tissues are placed on the to be glued layers to absorb any solvent excess.

Lastly, another clean Teflon sheet is placed on the tissues to complete the stack assembly.

The completed stack is placed in a hot-press and subsequently treated at an elevated temperature (40 - 100 °C) and pressure (4 - 16 mPa). In this process, the softened polymer layers, together with the solubilized "skin layer", are mechanically bonded to form an interlocking interface. The hot-pressing temperature, which is dependent on the material properties of the solvents used, should not exceed the boiling point of the solvent used, for example, a temperature between 70-80 °C is desired for isopropanol.

Subsequently, the hot-pressed polymer assembly is placed into a furnace with a temperature in the range of 80 - 120 °C (dependent on the material properties of the chosen system) to remove all of the type B solvent and partly remove the type A solvent to enhance the mechanical strength of the interface.

Lastly, the final composite membrane is obtained by submerging the polymer membrane in a type B solvent to remove the remaining type A solvent, thus solidifying the skin polymer in the interface.

As shown in Figure 3, the obtained composite membrane comprises three main layers. Firstly, the "skin layer", which comprises in this specific example the pristine PBI-type polymer. Secondly, the interlocked interface, consisting of a gradient of the skin polymer that intrudes into the third layer, the "support layer". This gradient acts as a mechanical bond interconnecting the "skin layer" to the "support layer", consequently preventing delamination. Lastly, the "support layer" is present, having minimal content of the polymer of the "skin layer" that intruded into the "support layer".

The polymer of the "skin layer" does not need to be dense, but it may also be porous.

### Examples

### Example 1:

Polybenzimidazole "glued" onto PDA-30 (Treofan, Germany) polypropylene (thickness of 30 µm).
**1.** Prepare the "gluing solution" by mixing isopropanol and DMAc in a 2:1 volume ratio (*e.g*. 20 mL isopropanol and 10 mL DMAc).
**2.** Cut a 6.5 by 6.5 cm piece of polybenzimidazole (6 µm, "skin layer") and place it on a clean Teflon sheet.
**3.** Cut a 7.0 by 7.0 cm piece of PDA-30 polypropylene ("support layer").
**4.** Remove dust and other unwanted particles from the polybenzimidazole and polypropylene films with the help of a Kimwipe^{®} disposable wiper (Kimtech, USA).
**5.** Carefully place the polypropylene film on top of the polybenzimidazole film, making sure that all of the polybenzimidazole film is covered.
**6.** Dip a Kimwipe^{®} disposable paper into the gluing solution and carefully move it, starting from the center and across the surface of the polypropylene layer.
**7.** Carefully remove all of the air bubbles present between the two layers with the Kimwipe^{®}.
**8.** Once all of the air bubbles are removed and the entire polypropylene film is wetted (showing clearly the polybenzimidazole layer lying underneath), remove the excess solvent from the Teflon sheet with a tissue and place two clean tissues on top of polypropylene film.
**9.** Place a second clean Teflon sheet on top of the tissues to complete the stack. Place the complete stack in between two metal sheets into the hot-press.
**10.** Hot-press the stack for 15 minutes at 80 °C and a force of 2.5 tons.
**11.** Remove the stack from the hot-press, let it cool down to room temperature and carefully remove the metal sheets, the on top lying Teflon sheet and the tissues to reveal the hot-pressed membrane on the Teflon sheet.
**12.** Use tweezers to peel the membrane from the Teflon sheet and place it with the polybenzimidazole layer facing up on a new Teflon sheet.
**13.** Place the Teflon sheet with the membrane in a furnace at 100 °C.
**14.** After 45 minutes, remove the membrane from the furnace and let it cool down to room temperature.
**15.** Submerge the membrane for 1 hour in isopropanol to solidify the interface completing the gluing process.
**16.** The finished membrane can directly be placed into an energy storage device, such as a redox flow battery, or undergo different pre-treatments to enhance different properties, such as curing or protonation by submersing the system in acid.

### Example 2:

A polybenzimidazole film of 6 microns thickness is "glued" onto PDA-30 (Treofan, Germany) polypropylene (thickness of 30 µm) and cycled in a vanadium redox flow cell comprising a 25 cm² electrochemical cell and 40 mL electrolyte (1.6 M of 3.5 vanadium in 2 M sulfuric acid and 0.5 M phosphoric acid from Oxkem, United Kingdom) in each tank, at room temperature under constant argon purge (5 mL/min) (set-up schematically shown in Figure 1). The unit electrochemical cell is assembled with a pair of porous carbon-based electrodes (Toyobo type AAF304ZS, 5×5 cm active area with a nominal thickness of 4.3 mm), current collectors (gold-plated copper current collectors from Scribner, USA) and a pair (2) of PVDF frames with elastomer seals on both sides (2 mm negative side, 3 mm positive side). The electrochemical cell is galvanostatically cycled at 120 mA/cm² for 90 cycles at a flow rate of 60 mL/min.

### Comparative example 1:

Polybenzimidazole laminated onto PDA-30 polypropylene without "gluing".
**1.** Cut a 6.5 by 6.5 cm piece of polybenzimidazole (6 µm) and place it on a clean Teflon sheet.
**2.** Cut a 7.0 by 7.0 cm piece of PDA-30 polypropylene.
**3.** Remove dust and other unwanted particles from the polybenzimidazole and polypropylene films with the help of a Kimwipe^{®} disposable paper.
**4.** Carefully place the polypropylene film on top of the polybenzimidazole film, making sure that all of the polybenzimidazole film is covered.
**5.** Place a second clean Teflon sheet on top of the PDA-30 polypropylene film to complete the stack.
**6.** Place the stack, in between two metal sheets, into the hot-press and hot-press the stack for 15 minutes at a temperature of 80 °C and a force of 4 tons.
**7.** Remove the stack from the hot-press, let it cool down to room temperature and carefully remove the metal sheets and the on top lying Teflon sheet to reveal the hot-pressed membrane on a Teflon sheet.
**8.** Carefully remove the hot-pressed membrane from the Teflon sheet with the help of tweezers and place it in isopropanol for 30 minutes to wet the membrane before assembling.
**9.** Observation can be made that the layers delaminated upon swelling of the membrane.

### Comparative example 2:

Nafion (NR212, Ion Power, USA) 51 microns (dry thickness) cycled in a vanadium redox flow cell comprising a 25 cm² electrochemical cell and 40 mL electrolyte (1.6 M of 3.5 vanadium in 2 M sulfuric acid and 0.5 M phosphoric acid, Oxkem, United Kingdom) in each tank, at room temperature under constant argon purge (5 mL/min). The electrochemical cell is assembled with a pair of porous carbon-based electrodes (Toyobo type AAF304ZS, 5×5 cm active area with a nominal thickness of 4.3 mm), current collectors (gold-plated copper current collectors from Scribner, USA) and a pair (2) of PVDF frames with elastomer seals on both sides (2 mm negative side, 3 mm positive side). The electrochemical cell is galvanostatically cycled at 120 mA/cm² for 90 cycles at 60 mL/min.

### Comparative example 3:

FAP-450, (Fumatech BWT group, Germany) 50 microns (dry thickness) cycled in a vanadium redox flow cell comprising a 25 cm² electrochemical cell and 40 mL electrolyte (1.6 M of 3.5 vanadium in 2 M sulfuric acid and 0.5 M phosphoric acid, Oxkem, United Kingdom) in each tank, at room temperature under constant argon purge (5 mL/min). The electrochemical cell is assembled with a pair of porous carbon-based electrodes (Toyobo type AAF304ZS, 5×5 cm active area with a nominal thickness of 4.3 mm), current collectors (gold-plated copper current collectors from Scribner, USA) and a pair (2) of PVDF frames with elastomer seals on both sides (2 mm negative side, 3 mm positive side). The electrochemical cell is galvanostatically cycled at 120 mA/cm² for 90 cycles at 60 mL/min.

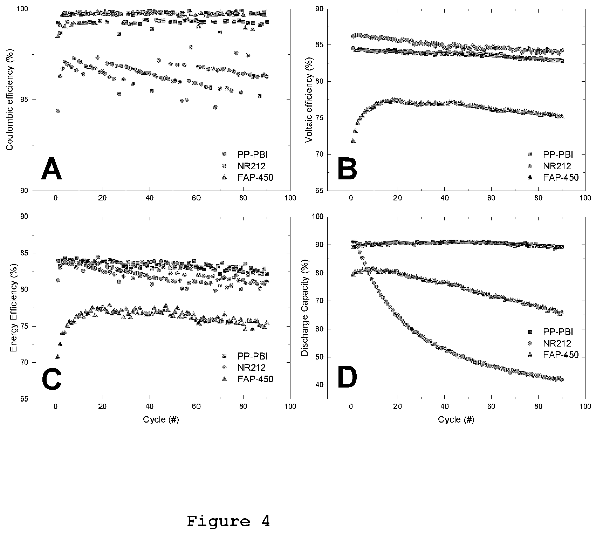

Figure 4 shows the results of a galvanostatic cycling (90 cycles at 120 mA/cm² and 60 mL/min) in an all-vanadium redox flow battery (see Figure 1), comprising a unit electrochemical cell and two volumetric tanks containing 40 mL each of vanadium electrolyte (1.6 M in 2 M aqueous sulphuric acid and 0.5 M aqueous phosphoric acid) at room temperature and under vigorous argon purge. In this setup three different membranes are tested:
*i)* Nafion (NR212, Ion Power, USA) as commercially employed cation exchange membrane;
*ii)* FAP-450 (Fumatech, Germany),as commercially employed anion exchange membrane;
*iii)* The composite membrane of the present invention (PP-PBI).

Figures from 4a) to 4d) display the performance of the composite membrane of the present invention compared to the two commercial membranes used as reference materials (Nafion NR212and FAP-450, respectively). All the three membranes are galvanostatically cycled (120 mA/cm², 60 mL/min) for 90 consecutive charging/ discharging cycles in an all-vanadium redox flow battery (comprising a unit electrochemical cell and 1.6 M in 2 M H₂SO₄ and 0.5 M H₃PO₄ electrolyte) .

Figure 4a) shows the coulombic efficiency (%) *vs.* cycle number for the three tested membranes. Figure 4b) represents the voltaic efficiency (%) *vs.* cycle number for the three tested membranes. Figure 4c) displays the energy efficiency (%) *vs.* cycle number for the three tested membranes and Figure 4d) shows the discharge capacity (%) *vs.* cycle number for the three tested membranes.

In Figure 4a), the commercial membrane FAP-450 and the composite membrane of the present invention (PP-PBI) show stable coulombic efficiency (*ca*. 99% over 90 cycles), while the other commercial membrane Nafion NR212 displays a lower coulombic efficiency (ca. 97% over 90 cycles). Self-discharge processes and/or gassing side reactions occurring during charging usually affect coulombic efficiency.

In Figure 4b), the commercial membrane Nafion NR212 and the composite membrane of the present invention (PP-PBI) show a rather stable voltaic efficiency (*ca.* 84% for PP-PBI and *ca.* 85% for the commercial membrane Nafion NR212, respectively). On the same graph, the commercial membrane FAP-450 shows lower voltaic efficiency (*ca*. 76% over 90 cycles). Usually, low voltaic efficiency is observed in presence of ohmic resistance, activation overpotential and concentration overpotential.

In Figure 4c), energy efficiency is represented as indicator of the overall cell performance, combining the trends in coulombic and voltage efficiencies as a function of current density. The commercial membrane Nafion NR212 and the membrane of the present invention (PP-PBI) display a rather high energy efficiency over 90 cycles at 120 mA/cm² (*ca*. 84% for PP-PBI and *ca.* 82% for the commercial Nafion NR212, respectively). The commercial membrane FAP-450 displays a lower energy efficiency (*ca*. 77% over 90 cycles), because of its lower voltaic efficiency.

In Figure 4d), discharge capacity for the three membranes over 90 cycles is displayed. The composite PP-PBI membrane of the present invention shows the highest and the most stable discharge capacity (*ca* 90% over 90 cycles), as compared to the two commercial materials (Nafion NR212 and FAP-450, respectively). Such behaviour in the composite membrane of the present invention is influenced by the particular structure with an interlocking interface, responsible of preventing delamination, frequently occurring in conventional membranes used for example in redox flow batteries.

## Claims

1. A method for laminating a polymer electrolyte film onto a porous support layer for generating a composite membrane, preferably for energy storage devices; comprising the following steps:
a) placing the polymer electrolyte film on a first flat support plate;
b) placing the porous support layer on the polymer electrolyte film;
c) wetting the porous support layer with a first solution comprising a first solvent, which is a high boiling point solvent, to partially solubilize the polymer electrolyte film allowing its solubilized fraction to flow into the pores of the porous support and a second solvent, which is a low boiling point solvent, to prevent excessive solubilization of the polymer electrolyte film, wherein the solubilized fraction of the polymer electrolyte film forms an interlocking interface with a superficial part of the porous support layer;
d) placing a second flat support plate, preferably with two tissues to absorb solvent excess, on the wetted porous support layer to form a stack having sandwiched the polymer electrolyte film, the interlocking interface and the porous support layer between the first and the second flat support plates;
e) hot-pressing the stack at an elevated temperature and an elevated pressure for a pre-defined amount of time;
f) cooling down the hot-pressed stack and removing the first and the second flat support plate to isolate the composite membrane comprising: *i)* the polymer electrolyte film, *ii)* the now solidified and formerly solubilized fraction of the polymer electrolyte film penetrated into the pores of the porous support layer forming a solidified interlocking interface and *iii)* the porous support layer.

2. The method according to claim 1, wherein the cooled down composite membrane is submerged in a second solution comprising the second solvent only for a pre-defined amount of time.

3. The method according to claim 1 or 2, wherein in the first solution the volumetric ratio of the first solvent/the second solvent is in the range of 3:1 to 1:5, preferably within 2:1 and 1:3, more preferably 1:2.

4. The method according to any of the preceding claims, wherein the polymer electrolyte film has a thickness in the range of 0.5 to 20 microns, preferably 0.5 to 10 microns, and the porous support layer has a thickness in the range of 20 to 100 microns, preferably in the range of 20 to 40 microns.

5. The method according to any of the preceding claims, wherein the polymer electrolyte film and the porous support layer are selected from a group consisting of: polybenzimidazole (PBI) polyphenylsulfone (PPSU), polysulfone (PSF), polyethersulfone (PES), sulfonated polyether ether ketone (SPEEK), sulfonated polyimide (SPI), polyfluoroether (PFE), polyfluoroether ketone sulfone (PAEK), polyphthalazone ether ketone (PEK), polyacrylonitrile (PAN), polyvinylidene fluoride (PVDF), polyimide (PI), polyurethane (PU), polyvinyl chloride (PVC), polyvinyl alcohol (PVA), polytetrafluoroethylene (PTFE), polyethylene (PE), polyethylene terephthalate (PET), polyetherimide (PEI), ethylene-tetrafluoroethylene copolymer (ETFE), polyphthalamide (PPA), polyvinylpolypyrrolidone (PVP) and polypropylene (PP).

6. The method according to any of the preceding claims, wherein the first solvent is selected from a group of high-boiling point polar aprotic solvents consisting of: N-methylpyrrolidone, N,N-dimethylacetamide, N,N-dimethylformamide, and dimethylsulfoxide, and the second solvent is selected from a group consisting of: isopropanol, n-propanol, methanol, ethanol, generally n-alkanoles and iso-alkanoles up to C8, tetrahydrofuran, dioxanes, cyclohexane, petroleum ether, acetonitrile, ethyl acetate, acetone, dimethyl ether, methyl ethyl ether, methyl tert-butyl ether, C₁-C₈ n-alkanoles, iso-alkanoles and ethers.

7. The method according to any of the preceding claims wherein the polymer electrolyte film is a PBI-type polymer and the porous support layer is a porous olefin-type polymer.

8. The method according to claim 7 wherein the first solution comprises DMAc as first solvent and isopropanol as second solvent.

9. A composite polymer membrane being produced by the method according to any of the preceding claims 1 to 8.

10. An electrochemical cell comprising a composite polymer membrane being produced by the method according to any of the preceding claims 1 to 8.
